(19) Europäisches Patentamt
European Patent Office
Office européen des brevets

(11) **EP 3 460 356 B1**

(12) **EUROPEAN PATENT SPECIFICATION**

(45) Date of publication and mention
of the grant of the patent:
**20.01.2021 Bulletin 2021/03**

(21) Application number: **17798954.8**

(22) Date of filing: **24.02.2017**

(51) Int Cl.:
*C09K 5/04* (2006.01)      *F25B 1/00* (2006.01)
*C10M 105/38* (2006.01)      *C10N 30/00* (2006.01)
*C10N 30/04* (2006.01)      *C10N 40/30* (2006.01)

(86) International application number:
**PCT/JP2017/007091**

(87) International publication number:
**WO 2017/199516 (23.11.2017 Gazette 2017/47)**

(54) **REFRIGERATION CYCLE DEVICE**

KÄLTEKREISLAUFVORRICHTUNG

DISPOSITIF À CYCLE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2016 JP 2016098626**

(43) Date of publication of application:
**27.03.2019 Bulletin 2019/13**

(73) Proprietor: **Mitsubishi Electric Corporation
Chiyoda-ku
Tokyo 100-8310 (JP)**

(72) Inventors:
• **MIZUNO, Kota**
**Tokyo 100-8310 (JP)**
• **SUGIURA, Kanichiro**
**Tokyo 100-8310 (JP)**
• **MATSUNAGA, Noriaki**
**Tokyo 100-8310 (JP)**
• **HIRAKAWA, Yutaka**
**Tokyo 100-8310 (JP)**

(74) Representative: **Mewburn Ellis LLP
Aurora Building
Counterslip
Bristol BS1 6BX (GB)**

(56) References cited:
WO-A1-2012/086518      WO-A1-2015/141679
JP-A- H0 931 450      JP-A- H05 157 379
JP-A- H07 188 687      JP-A- H08 120 288
JP-A- 2002 129 179      JP-A- 2002 129 179
JP-A- 2002 227 767      JP-A- 2002 227 767
JP-A- 2010 139 171

• K Inoue ET AL: "Mutual Solubility of Refrigerants
and Polyol Esters", International Refrigeration
and Air Conditioning Conference. Paper 240, 1
January 1994 (1994-01-01), XP055572985,
Retrieved from the Internet:
URL:https://docs.lib.purdue.edu/cgi/viewco
ntent.cgi?article=1239&context=iracc
• Robert F Fedors: "A method for estimating both
the solubility parameters and molar volumes of
liquids", Polymer Engineering and Science, 1
February 1974 (1974-02-01), pages 147-154,
XP055572996, DOI: 10.1002/pen.760140211
Retrieved from the Internet:
URL:https://www.researchgate.net/profile/D
aniel_Delgado/post/How_can_I_calculate_the
_molar_volume_of_an_organic_solid_compoun
d _at_different_temperatures/attachment/59d6
2c28c49f478072e9dd9a/AS:273542057267206@
14
42228916496/download/Polymer%20Engineerin
g
%20&%20Science%20Volume%2014%20issue%
202%2 01974%20 d

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a refrigeration cycle apparatus.

BACKGROUND ART

As a part of the measures to prevent global warming, switching refrigerant (working fluid), which is used in an apparatus (refrigeration cycle apparatus) such as an air conditioning apparatus that forms a refrigeration cycle, from conventionally mainly used HFC-410A refrigerant to refrigerant having a lower global warming potential (GWP) is under consideration.

HFC-32 which is one of the main components of HFC-410A has a GWP (675) lower than a GWP (2090) of HFC-410A. In addition, a theoretical COP (coefficient of performance) and a heat transfer coefficient of HFC-32 are relatively high and a pressure loss of the refrigerant is low, and thus, HFC-32 has such a property that the energy efficiency is high when HFC-32 is used in the refrigeration cycle. Therefore, introduction of HFC-32 as alternative refrigerant is under way.

However, due to the thermal property of HFC-32, an internal temperature of a compressor forming the refrigeration cycle apparatus tends to increase as compared with the conventional art when HFC-32 is used as refrigerant. For example, a temperature of a motor portion configured to rotationally drive a compression mechanism portion of the compressor is 90°C in the case of using HFC-410A which is the conventional refrigerant, whereas the temperature may increase up to approximately 130°C in the case of using HFC-32.

Therefore, a compressor in which HFC-32 is used requires a higher level of chemical stability (such as heat resistance, oil resistance and moisture resistance) for an organic material such as a refrigerator oil and an insulating material (refer to PTD 2).

Under such a circumstance, a compressor in which low-GWP refrigerant is used includes the following techniques.

PTD 1 (Japanese Patent Laying-Open No. 7-188687) discloses a refrigerator oil excellent in compatibility with hydrofluoroalkane refrigerant (HFC-32 refrigerant), wherein an ester oil is used as the refrigerator oil, the ester oil being aliphatic ester formed of an aliphatic acid and aliphatic alcohol, a solubility parameter of the ester oil being not less than 8.8, the carbon number of a terminal alkyl group of the ester oil being not more than 6 in a straight-chain portion, and a molecular weight of the ester oil being not more than 900.

PTD 2 (Japanese Patent Laying-Open No. 2015-172204) discloses a lubricant composition, wherein an oxygen-containing organic compound is used as a base oil, the oxygen-containing organic compound having a hydroxyl value of not more than 15 mgKOH/g and being composed of at least one selected from polyoxyalkylene glycols, polyvinyl ethers, a copolymer of polyoxyalkylene glycol or monoether thereof and polyvinyl ether, and polyol esters. PTD 2 describes that this lubricant composition is excellent in thermal stability and chemical stability even when refrigerant including saturated fluorinated hydrocarbon having the carbon number of 1 to 3 is used as refrigerant.

PTD 3 (Japanese Patent Laying-Open No. 2015-168769) discloses a polyester film used as an insulating material of a compressor, the polyester film satisfying that (1) an amount of elution of an oligomer is within a certain range in a test of oligomer elution into an oil and (2) a ratio of the spectral intensity observed for each of two certain wavelengths is within a certain range when a surface of the polyester film is measured using a Fourier transform infrared spectroscopy (FT-IR).

CITATION LIST

PATENT DOCUMENT

PTD 1: Japanese Patent Laying-Open No. 7-188687
PTD 2: Japanese Patent Laying-Open No. 2015-172204
PTD 3: Japanese Patent Laying-Open No. 2015-168769

JP 2002 129179 A describes a refrigerator which uses an ester-based refrigerator oil mainly comprising a polyol ester or a complex ester and having a viscosity at 40°C of 32-100 cSt. The ester contains 20-60 wt.% esters based on 5C or lower monobasic fatty acids, and 8C or higher fatty acids used for preparing the ester are branched fatty acids.

JP 2002 227767 A describes a hermetic compressor in which a stator winding formed by being directly wound around the teeth part of a stator core through an insulating material is provided, a coolant in a H F C group is used for its coolant, and refrigerating machine oil having no mutual solubility or having weak compatibility relative to the coolant is used.

WO 2012/086518 A1 describes a compressor equipped with a cooling medium compression section having a sliding member, and having difluoromethane that acts as a cooling medium and a refrigerating machine oil both enclosed therein, wherein the refrigerating machine oil to be used has a kinematic viscosity of 30-100 mm$^2$/s at 40°C and a lower-temperature-side critical solution temperature between the cooling medium and the refrigerating machine oil is +10°C or lower.

## SUMMARY OF INVENTION

### TECHNICAL PROBLEM

The present inventors fabricated a compressor in which a polyethylene terephthalate (PET) film was used as an insulating material and HFC-32 was used as refrigerant, and made a trial run. As a result, a foreign substance (sludge) precipitated in a throttle portion and the like of a refrigeration cycle and caused clogging, which led to the stop of an apparatus in some cases.

In order to investigate the cause, the present inventors examined a sludge component causing clogging, using the infrared spectroscopy. Thus, the present inventors found that the sludge component was PET.

It is known that due to the properties of HFC-32, a temperature of a motor portion of a compressor increases when HFC-32 is used as refrigerant. Since the temperature of the motor portion is high, an oligomer included in the PET film is easily eluted into a refrigerant/refrigerator oil mixture when the PET film is exposed to the refrigerant/refrigerator oil mixture.

On the other hand, it is also known that due to the properties of HFC-32, a temperature of an evaporator decreases by approximately 20°C. Therefore, the oligomer eluted in the motor portion can no longer be dissolved in the refrigerant/refrigerator oil mixture in the low temperature portion and is precipitated. The present inventors found that a malfunction occurred in the refrigeration cycle in this way.

In view of the above-described problem, an object of the present invention is to provide a refrigeration cycle apparatus in which a macromolecule oligomer is less likely to precipitate in a refrigeration cycle and a malfunction does not occur.

### SOLUTION TO PROBLEM

A refrigeration cycle apparatus of the present invention includes: a refrigerant circuit; and a motor portion, the refrigerant circuit including a compressor, a condenser and an evaporator. Refrigerant is contained in the refrigerant circuit. A refrigerator oil is filled into the compressor. An insulating material including a polyester-based resin used in the motor portion is immersed in the refrigerator oil. A solubility parameter, with units cal$^{1/2}$cm$^{-3/2}$, at not lower than 90°C and not higher than 130°C, and at not less than 1.9 MPa and not more than 4.5 MPa, of a mixture of the refrigerant and the refrigerator oil is not less than 8.2 and not more than 9.0, the solubility parameter being obtained as described herein. The solubility parameter of a mixture of the refrigerant and the refrigerator oil is an average value of a solubility parameter of each of the refrigerant and the refrigerator oil, the average value being calculated based on: the solubility parameter of each of the refrigerant and the refrigerator oil; and a mixing ratio of the refrigerant in solution and the refrigerator oil in solution at the motor portion. The refrigerator oil is a polyol ester oil. The polyol ester oil is an ester reaction product of an aliphatic acid and at least one of pentaerythritol and neopentylglycol. The carbon number of the aliphatic acid is not less than 4 and not more than 9. A ratio of a straight-chain aliphatic acid included in the aliphatic acid is not less than 10 mass % and not more than 70 mass %. A temperature of the motor portion is not lower than 90°C and not higher than 130°C. A pressure of the motor portion is not less than 1.9 MPa and not more than 4.5 MPa. The refrigerant is difluoromethane. A temperature of the evaporator is not lower than -35°C and not higher than -25°C.

### ADVANTAGEOUS EFFECTS OF INVENTION

According to the present invention, there can be provided a refrigeration cycle apparatus in which a macromolecule oligomer is less likely to precipitate in a refrigeration cycle and a malfunction does not occur.

### BRIEF DESCRIPTION OF DRAWINGS

Fig. 1 is a schematic diagram showing a basic configuration of one example of a refrigeration cycle apparatus according to a first embodiment.
Fig. 2 is a cross-sectional view of one example of a compressor used in the first embodiment.

DESCRIPTION OF EMBODIMENTS

An embodiment of the present invention will be described hereinafter with reference to the drawings. In the drawings, the same reference characters indicate the same or corresponding portions.

First Embodiment

Before describing a configuration and the like of a refrigeration cycle apparatus according to a first embodiment, a mechanism for suppressing precipitation of a macromolecule oligomer that causes clogging of a throttle portion of the refrigeration cycle apparatus will be described first. "Throttle portion" refers to a narrow portion in a refrigerant circuit, such as a thin tube and a capillary tube in a compressor.

The macromolecule oligomer that causes clogging is included in a macromolecule material used for insulation of a motor and the like. A motor portion has a relatively high temperature in the refrigeration cycle apparatus. Therefore, in the motor portion, the oligomer is easily eluted from the macromolecule material (polyester-based resin) into a mixture of refrigerant and refrigerator oil (refrigerant/refrigerator oil mixture).

The oligomer eluted into the refrigerant/refrigerator oil mixture circulates through a refrigeration cycle (refrigerant circuit) together with the mixture. When the mixture including the oligomer passes through an evaporator which is a low temperature portion in the refrigeration cycle, the solubility of the oligomer in the refrigerant/refrigerator oil mixture becomes extremely low due to the low temperature, and thus, the oligomer is precipitated from the mixture. As a result, the throttle portion is clogged with the precipitated oligomer.

In the present embodiment, in order to prevent the oligomer from being eluted into the refrigerant/refrigerator oil mixture in the high temperature portion and to prevent the oligomer from precipitating from the refrigerant/refrigerator oil mixture in the low temperature portion, a particular refrigerator oil is selected and an SP value (solubility parameter) of the refrigerant/refrigerator oil mixture is adjusted to be not less than 8.2 and not more than 9.0.

The SP value is a numerical value indicating ease of mixing of two components, and as a difference in SP value between the two components becomes smaller, the mutual solubility of the two components becomes higher. For example, an SP value of polyethylene terephthalate used in an insulating material is 10.7, and by adjusting a difference between this SP value and an SP value of the refrigerant/refrigerator oil mixture, an amount of elution of the oligomer can be adjusted. An SP value of PEN is 10.9 and an SP value of PBT is 10.0.

In order to suppress precipitation of the macromolecule oligomer in the refrigeration cycle (in the evaporator and the like) and suppress the occurrence of a malfunction, elution of the oligomer into the refrigerant/refrigerator oil mixture in the high temperature portion needs to be less likely and precipitation of the oligomer in the low temperature portion needs to be less likely (it is necessary to make it easier to maintain the oligomer-dissolved state).

When the difference between the SP value of the refrigerant/refrigerator oil mixture and the SP value of the polyester-based resin becomes smaller than a certain value, the amount of elution of the oligomer of the polyester-based resin into the refrigerant/refrigerator oil mixture increases and an oligomer concentration in the refrigerant/refrigerator oil mixture increases in the high temperature portion. On the other hand, when the difference between the SP value of the refrigerant/refrigerator oil mixture and the SP value of the polyester-based resin becomes larger than the certain value, the solubility of the oligomer in the refrigerant/refrigerator oil mixture becomes lower and the oligomer is easily precipitated in the low temperature portion.

From this perspective, in the present invention, a range of the SP value of the refrigerant/refrigerator oil mixture is defined to be not less than 8.2 and not more than 9.0 based on an experimental result of Examples (Test Examples) described below.

The SP value is defined based on the conditions of the motor portion. Specifically, the conditions of the motor portion are a temperature condition of not lower than 90°C and not higher than 130°C and a pressure condition of not less than 1.9 MPa and not more than 4.5 MPa, e.g., a temperature condition of 130°C and a pressure condition of 4.5 MPa.

The refrigerator oil filled into the motor of the compressor circulates through the refrigerant circuit and returns to the compressor together with the refrigerant (as the refrigerant/refrigerator oil mixture). The solubility parameter of the refrigerant/refrigerator oil mixture (mixture of the refrigerant and the refrigerator oil) varies not only with the type of the refrigerant and the refrigerator oil but also with a mixing ratio of the refrigerant and the refrigerator oil.

The mixing ratio is not constant during circulation through the refrigerant circuit and varies with the temperature and pressure conditions in the refrigerant circuit. However, when the temperature and the pressure are determined, the mixing ratio is determined. Therefore, the range (not less than 8.2 and not more than 9.0) of the solubility parameter of the mixture of the refrigerant and the refrigerator oil is defined under the above-described particular temperature and pressure conditions. The above-described temperature and pressure conditions correspond to general conditions in the motor under which the oligomer is most likely to be eluted into the refrigerant/refrigerator oil mixture.

In order to provide a refrigeration cycle apparatus in which precipitation of a macromolecule oligomer in a refrigeration cycle is suppressed and a malfunction is suppressed, it is also conceivable to use a macromolecule material that does not include an oligomer. In this case, however, a high level of purification technique and the cost are required to fabricate the macromolecule material that does not include an oligomer. In contrast, the refrigeration cycle apparatus according to the present embodiment can be fabricated easily and at low cost.

(Refrigeration Cycle Apparatus)

A refrigeration cycle apparatus according to the present embodiment includes a refrigerant circuit including a compressor, a condenser and an evaporator. Refrigerant is contained in the refrigerant circuit. A refrigerator oil is filled into the compressor. An insulating material including a polyester-based resin is immersed in the refrigerator oil.

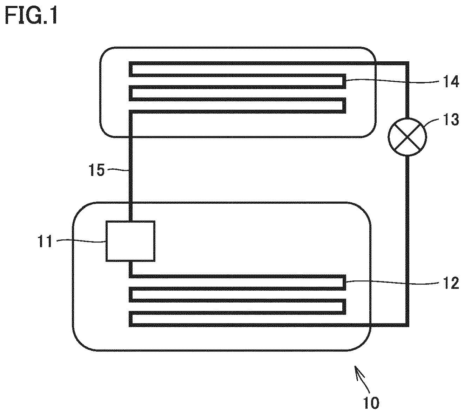

Fig. 1 shows a basic configuration of one example of a refrigeration cycle apparatus according to a first embodiment of the present invention.

In Fig. 1, a refrigeration cycle apparatus 10 has a compressor 11 configured to compress refrigerant, a condenser 12 configured to condense the refrigerant discharged from compressor 11, an expansion valve 13 configured to expand the refrigerant having flown out of condenser 12, an evaporator 14 configured to evaporate the refrigerant having flown out of expansion valve 13, and a refrigerant pipe 15 configured to connect these components and circulate the refrigerant. These components form a refrigerant circuit and the refrigerant is contained in the refrigerant circuit.

A capillary tube having an inner diameter of 1 mm is, for example, used as refrigerant pipe 15. In addition, a switching valve (e.g., four-way valve) configured to change a flow direction of the refrigerant, a blower configured to deliver the refrigerant and the like toward condenser 12 and evaporator 14, and the like may be further provided as needed.

A temperature of evaporator 14 is approximately -35°C to -25°C and is likely to become low particularly when HFC-32 is used. Therefore, an oligomer dissolved in a refrigerant/refrigerator oil mixture is easily precipitated inside evaporator 14.

(Compressor)

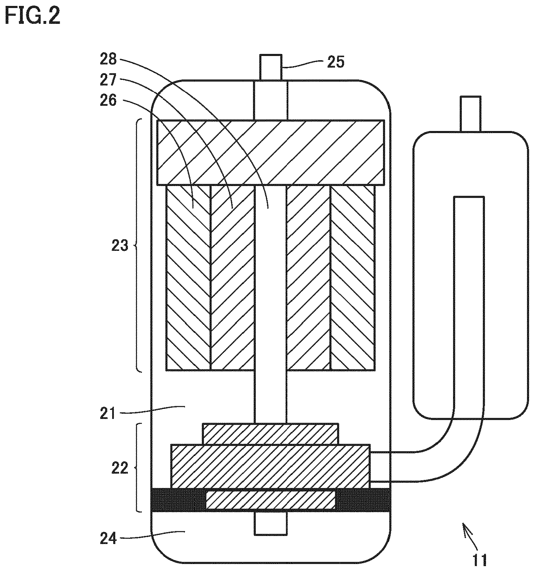

Fig. 2 is a cross-sectional view of one example of the compressor used in the present embodiment. As shown in Fig. 2, a compression mechanism portion 22 configured to compress the refrigerant and a motor portion 23 configured to rotationally drive compression mechanism portion 22 are placed in a sealed container 21.

An oil reservoir 24 configured to store a refrigerator oil which is a lubricant for smoothly rotating compression mechanism portion 22 is provided at the bottom of sealed container 21. The refrigerator oil is discharged from an outlet 25, together with the high-temperature and high-pressure refrigerant compressed by compression mechanism portion 22. Therefore, motor portion 23 is exposed to the high-temperature and high-pressure refrigerant/refrigerator oil mixture.

(Motor)

Motor portion 23 has a stator 26 fixed to the sealed container and a rotor 27 surrounded by stator 26 and rotating. A drive shaft 28 configured to drive the compression mechanism portion is placed in rotor 27.

Rotor 27 has a cylindrical shape and is provided with a plurality of teeth portions (not shown) protruding from a back yoke portion toward the center and a winding wound around the teeth portions with an insulator interposed therebetween.

The insulating material includes a polyester-based resin. Examples of the polyester-based resin include polyethylene terephthalate (PET), polyethylene naphthalate (PEN), polybutylene terephthalate (PBT) and the like. A content of an oligomer included in the insulating material is not particularly limited.

The polyester-based resin is preferably at least one selected from the group consisting of PET, PEN and PBT. This is because the SP values of these resins are very similar, and thus, the effect of the present invention is similarly obtained if the range (not less than 8.2 and not more than 9.0) of the SP value of the refrigerant/refrigerator oil mixture experimentally defined for PET is satisfied.

A pressure (internal pressure) of the motor is not less than 1.9 MPa and not more than 4.5 MPa, and is lower during the heating operation than during the cooling operation.

In addition, a maximum temperature in the motor is within the range of not lower than 90°C and not higher than 130°C. Particularly when HFC-32 is used as the refrigerant, the maximum temperature in the motor tends to increase and the oligomer of the polyester-based resin included in the insulating material is more easily dissolved in the refrigerant/refrigerator oil mixture.

(Refrigerant)

The refrigerant is difluoromethane (HFC-32)

(Refrigerator Oil)

A refrigerator oil in which the solubility parameter (SP value) of the refrigerant/refrigerator oil mixture is not less than 8.2 and not more than 9.0 when the temperature is not lower than 90°C and not higher than 130°C and the pressure is not less than 1.9 MPa and not more than 4.5 MPa (conditions in motor portion 23) is selected as the refrigerator oil.

Specifically, the refrigerator oil is a polyol ester oil (POE oil) which is an ester reaction product of an aliphatic acid and at least one of pentaerythritol and neopentylglycol, the carbon number of the aliphatic acid being not less than 4 and not more than 9, a ratio of a straight-chain aliphatic acid included in the aliphatic acid being not less than 10 mass % and not more than 70 mass %..

Among these refrigerator oils, the POE oil having a high polarity is preferably used. This is because the POE oil is suitable for setting the SP value of the refrigerant/refrigerator oil mixture to fall within the range of not less than 8.2 and not more than 9.0.

The POE oil is an ester reaction product of polyalcohol and an aliphatic acid, i.e., an ester compound obtained by ester bonding of a group derived from polyalcohol and a group derived from an aliphatic acid.

The above-described polyalcohol is at least one of pentaerythritol and neopentylglycol. This is because the viscosity range appropriate for a compressor lubricant is achieved.

The carbon number of the above-described aliphatic acid is not less than 4 and not more than 9. This is because the viscosity range appropriate for a compressor lubricant is achieved. In addition, a ratio of a straight-chain aliphatic acid included in the above-described aliphatic acid is not less than 10 mass % and not more than 70 mass %. This is because the SP value of the refrigerant/refrigerator oil mixture falls within the range of not less than 8.2 and not more than 9.0.

Examples of the straight-chain aliphatic acid include butanoic acid, pentanoic acid, hexanoic acid, heptanoic acid, octanoic acid, nonanoic acid and the like. By using these aliphatic acids, the SP value of the above-described ester compound can be made higher (e.g., 9.3 to 10.0).

A component of the above-described aliphatic acid other than the above-described straight-chain aliphatic acid may be a branched aliphatic acid. Examples of the branched aliphatic acid include 2-methylpropionic acid, 2-methylbutanoic acid, 3-methylbutanoic acid, 2,2-dimethylpropanoic acid, 3-methylpentanoic acid, 4-methylpentanoic acid, 2,2-dimethylbutanoic acid, 2,3-dimethylbutanoic acid, 2,4-dimethylbutanoic acid, 3,3-dimethylbutanoic acid, 2-ethylbutanoic acid, heptanoic acid, 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, 1,1,2-trimethylbutanoic acid, 1,2,2-trimethylbutanoic acid, 1-ethyl-1-methylbutanoic acid, 1-ethyl-2-methylbutanoic acid, octanoic acid, 2-ethylhexanoic acid, 3-ethylhexanoic acid, 3,5-dimethylhexanoic acid, 2,4-dimethylhexanoic acid, 3,4-dimethylhexanoic acid, 4,5-dimethylhexanoic acid, 2,2-dimethylhexanoic acid, 2-methylheptanoic acid, 3-methylheptanoic acid, 4-methylheptanoic acid, 5-methylheptanoic acid, 6-methylheptanoic acid, 2-propylpentanoic acid, 2,2-dimethylheptanoic acid, 3,5,5-trimethylhexanoic acid, 3-methyl-5-dimethylhexanoic acid, 2-methyloctanoic acid, 2-ethylheptanoic acid, 3-methyloctanoic acid, 2-ethyl-2,3,3-trimethyl butyric acid, 2,2,4,4-tetramethylpentanoic acid, 2,2,3,3-tetramethylpentanoic acid, 2,2,3,4-tetramethylpentanoic acid, 2,2-diisopropylpropionic acid and the like.

These refrigerator oils may include a common lubricant additive. Examples of the lubricant additive include an antioxidant (such as 2,6-di-tert-butyl-p-cresol), an extreme pressure agent (such as tricresyl phosphate) and an acid scavenger (such as 4-vinylcyclohexene dioxide).

(SP Value of Refrigerant/Refrigerator Oil Mixture)

The SP value of the refrigerant/refrigerator oil mixture is calculated as follows.

First, an SP value of each of the refrigerant and the refrigerator oil is calculated. Using the SP value of each of the refrigerant and the refrigerator oil as well as the mixing ratio of the refrigerant and the refrigerator oil in the motor portion, an average value of the SP values is calculated as the SP value of the refrigerant/refrigerator oil mixture.

First, the SP value ($\delta$) of each (single unit) of the refrigerant and the refrigerator oil is calculated in accordance with Equation (1) below:

$$\delta = [\Sigma Ecoh/\Sigma V]1/2 \qquad ... (1)$$

where $E_{coh}$ represents the aggregation energy, and V represents a mole molecular volume. Herein, cal/mol is used as the unit of the aggregation energy. Table 1 shows values of the aggregation energy and the mole molecular volume ($E_{coh}$ and V proposed by Fedors) for various substituents.

[Table 1]

|  | Ecoh | V |
|---|---|---|
| -CH$_3$ | 1125 | 33.5 |
| -CH$_2$- | 1180 | 16.1 |
| -CH< | 820 | -1.0 |
| >C< | 350 | -19.2 |
| =CH$_2$ | 1030 | 28.5 |
| =CH- | 1030 | 13.5 |
| >C= | 1030 | -5.5 |
| HCΞ | 920 | 27.4 |
| -CN | 1690 | 6.5 |
| -OH | 6100 | 24.0 |
| -O- | 7120 | 3.8 |
| -CHO | 800 | 22.3 |
| -CO- | 5100 | 10.8 |
| -COOH | 4149 | 28.5 |
| -COO- | 6600 | 18.0 |
| -HCO$_3$ | 3000 | 18.0 |
| F | 1000 | 18.0 |
| -F (two-group substitution) | 850 | 20.0 |
| -F (three-group substitution) | 550 | 22.0 |
| -CF$_2$- (perfluorinated compound) | 1020 | 23.0 |
| -CF$_3$ (perfluorinated compound) | 1020 | 57.5 |
| -Cl | 2760 | 24.0 |
| -Cl (two-group substitution) | 2300 | 26.0 |

A percentage of the refrigerant dissolved in the refrigerator oil needs to be obtained experimentally. A common method for obtaining the solubility parameter of "refrigerant/refrigerator oil mixture" is, for example, to fill a prescribed amount of refrigerant and refrigerator oil into a pressure vessel, measure the pressure at each temperature, calculate an amount of liquid-phase refrigerant except for an amount of gas-phase refrigerant, and calculate the solubility parameter based on the amount of liquid-phase refrigerant and the amount of refrigerator oil.

Specifically, 350 mL of refrigerator oil and 100 mL of liquid refrigerant are contained in a 950 cc pressure vessel and a test is conducted. An amount of the refrigerant in the refrigerator oil is estimated, while measuring the pressure in the pressure vessel and changing the temperature.

Although the refrigerant/refrigerator oil mixture is present in the form of gas or liquid in the refrigerant circuit, the solubility parameter is a value for liquid in the present embodiment. When the temperature is not lower than 90°C and not higher than 130°C and the pressure is not less than 1.9 MPa and not more than 4.5 MPa, the refrigerant/refrigerator oil mixture is liquid.

Examples

While the present invention will be described in more detail below with reference to Examples, the present invention is not limited thereto.

(Test Example)

In the present test example, an actual machine test was conducted to verify that the configuration of the refrigeration cycle apparatus described in the first embodiment prevented the stop of the apparatus caused by clogging.

The test conditions are shown in Table 2. As shown in Table 2, HFC-32 was used as refrigerant for test machines A-1, A-2, A-3, and A-4. The temperature of motor portion 23 of each of these test machines was 130°C and the internal pressure thereof was 4.5 MPa. Furthermore, the temperature of evaporator 14 was -35°C. An insulating material used in motor portion 23 was PET.

In test machine A-1, the refrigerator oil including the ester compound (composition ratio: about 30%) composed of pentaerythritol and 3,5,5-trimethylhexanoic acid, the ester compound (composition ratio: about 60%) composed of pentaerythritol and pentanoic acid, and the ester compound (composition ratio: about 10%) composed of pentaerythritol and heptanoic acid was used such that the SP value of the refrigerant/refrigerator oil mixture was 9.1 under the above-described conditions.

In test machine A-2, a refrigerator oil including an ester compound (composition ratio: about 40%) composed of pentaerythritol and 3,5,5-trimethylhexanoic acid, an ester compound (composition ratio: about 50%) composed of pentaerythritol and pentanoic acid, and an ester compound (composition ratio: about 10%) composed of pentaerythritol and heptanoic acid was used such that the SP value of the refrigerant/refrigerator oil mixture was 9.0.

In test machine A-3 (reference), an alkylbenzene oil was used such that the SP value of the refrigerant/refrigerator oil mixture was 8.2 under the above-described temperature and pressure conditions.

In test machine A-4 (reference), a polyvinyl ether oil was used such that the SP value of the refrigerant/refrigerator oil mixture was 8.1 under the above-described temperature and pressure conditions. The polyvinyl ether oil used in A-4 was Daphne Hermetic Oil manufactured by Idemitsu Kosan Co., Ltd.

Table 2 shows whether or not clogging occurred in a throttle portion.

[Table 2]

| Test machine | Refrigerant | Temperature of motor | Temperature of evaporator | Refrigerant concentration in oil | SP value of refrigerant/ refrigerator oil in motor portion | Clogging of throttle portion |
|---|---|---|---|---|---|---|
| A-1 | HFC-32 | 130°C | -35°C | 4% | 9.1 | occurred |
| A-2 | | | | 4% | 9.0 | not occurred |
| A-3 (reference) | | | | 4% | 8.2 | not occurred |
| A-4 (reference) | | | | 5% | 8.1 | occurred |

As shown in Table 2, clogging did not occur in test machine A-2 in which the SP value was 9.0. However, clogging occurred in test machine A-1 in which the SP value was 9.1. On the other hand, clogging did not occur in test machine A-3 (reference) in which the SP value was 8.2. However, clogging occurred in test machine A-4 (reference) in which the SP value was 8.1.

As described above, when the SP value of the refrigerant/refrigerator oil mixture becomes larger than 9.0, a difference between the SP value of PET, i.e., 10.7 and the SP value of the mixture becomes smaller and a large amount of oligomer is eluted into the mixture, which causes an increase in oligomer concentration in the mixture.

On the other hand, when the SP value of the refrigerant/refrigerator oil mixture becomes smaller than 8.2, the difference between the SP value of PET, i.e., 10.7 and the SP value of the mixture becomes larger and the solubility of the oligomer becomes lower. As a result, the oligomer is easily precipitated in a low temperature portion.

Based on these experimental results, the range of the SP value of the refrigerant/refrigerator oil mixture was defined to be not less than 8.2 and not more than 9.0 in the above-described first embodiment.

The SP value (solubility parameter) of the refrigerant and the SP value of each refrigerator oil were calculated using Equation (1) and the values in Table 1 above. For example, HFC-32 ($CH_2F_2$) can be calculated using the values of -$CH_2$- and F (two-group substitution) in Table 1, and specifically calculated in accordance with SP value = $\sqrt{[(1180 \times 2 \times 850)/(16.1 + 20 \times 2)]}$. In the case of the refrigerator oil, the SP value of the refrigerator oil can be calculated by calculating an SP value of an esterification reactant of an aliphatic acid and alcohol. When a plurality of esterification reactants are included, the SP value of the refrigerator oil can be calculated from a mixing ratio thereof.

The SP value of the refrigerant/refrigerator oil mixture (refrigerator oil having the refrigerant dissolved therein) is calculated from an average value of the mixing ratio. 350 mL of refrigerator oil and 100 mL of liquid refrigerant were contained in a 950 cc pressure vessel and a test was conducted. An amount of the refrigerant in the refrigerator oil was estimated, while measuring the pressure in the pressure vessel and changing the temperature.

(Reference Example)

In the present reference example, a test similar to the above-described test example 1 was conducted for the case of using test machines B-1, B-2, B-3, and B-4 and using HFC-410A as refrigerant. The test conditions are shown in Table 3.

As shown in Table 3, HFC-410A, the conventional refrigerator, was used in test machines B-1, B-2, B-3, and B-4, and the temperature of motor portion 23 of these test machines was 100°C and the internal pressure thereof was 2 MPa. The temperature of evaporator 14 was -10°C. An insulating material used in motor portion 23 was PET.

In test machine B-1, a refrigerator oil including an ester compound (composition ratio: about 50%) composed of pentaerythritol and 3,5,5-trimethylhexanoic acid, an ester compound (composition ratio: about 40%) composed of pentaerythritol and pentanoic acid, and an ester compound (composition ratio: about 10%) composed of pentaerythritol and heptanoic acid was used such that the SP value of the refrigerant/refrigerator oil mixture was 9.1 under the above-described conditions.

In test machine B-2, a refrigerator oil including an ester compound (composition ratio: about 50%) composed of pentaerythritol and 3,5,5-trimethylhexanoic acid, an ester compound (composition ratio: about 20%) composed of pentaerythritol and pentanoic acid, and an ester compound (composition ratio: about 30%) composed of pentaerythritol and heptanoic acid was used such that the SP value of the refrigerant/refrigerator oil mixture was 9.0 under the above-described conditions.

In test machine B-3, an alkylbenzene oil was used such that the SP value of the refrigerant/refrigerator oil mixture was 8.2 under the above-described temperature and pressure conditions.

In test machine B-4, a polyvinyl ether oil was used such that the SP value of the refrigerant/refrigerator oil mixture was 8.0 under the above-described temperature and pressure conditions. The polyvinyl ether oil used in test machine B-4 was Daphne Hermetic Oil manufactured by Idemitsu Kosan Co., Ltd.

Table 3 shows whether or not clogging occurred in a throttle portion.

[Table 3]

| Test machine | Refrigerant | Temperature of motor | Temperature of evaporator | Refrigerant concentration in oil | SP value of refrigerant/ refrigerator oil in motor portion | Clogging of throttle portion |
|---|---|---|---|---|---|---|
| B-1 | HFC-410A | 100°C | -10°C | 11% | 9.1 | not occurred |
| B-2 | | | | 12% | 9.0 | not occurred |
| B-3 | | | | 7% | 8.2 | not occurred |
| B-4 | | | | 12% | 8.0 | not occurred |

As shown in Table 3, clogging did not occur in all test machines. Therefore, in the case of using HFC-410A, a refrigeration cycle apparatus without clogging can be fabricated even when any of the refrigerator oils is used. This shows that the above-described embodiment is effective particularly when the refrigerant such as HFC-32 that causes an increase in temperature of the motor is used.

REFERENCE SIGNS LIST

10 refrigeration cycle apparatus; 11 compressor; 12 condenser; 13 expansion valve; 14 evaporator; 15 refrigerant pipe; 21 sealed container; 22 compression mechanism portion; 23 motor portion; 24 oil reservoir; 25 outlet; 26 stator; 27 rotor; 28 drive shaft.

**Claims**

1. A refrigeration cycle apparatus (10) comprising: a refrigerant circuit; and a motor portion (23), the refrigerant circuit comprising a compressor (11), a condenser (12) and an evaporator (14), wherein
refrigerant is contained in the refrigerant circuit,
a refrigerator oil is filled into the compressor (11), and an insulating material including a polyester-based resin used in the motor portion (23) is immersed in the refrigerator oil,
a solubility parameter, with units $cal^{1/2}cm^{-3/2}$, at not lower than 90°C and not higher than 130°C, and at not less than 1.9 MPa and not more than 4.5 MPa, of a mixture of the refrigerant and the refrigerator oil is not less than 8.2 and not more than 9.0, the solubility parameter being obtained according to the appended description,
the solubility parameter of a mixture of the refrigerant and the refrigerator oil is an average value of a solubility parameter of each of the refrigerant and the refrigerator oil, the average value being calculated based on: the solubility parameter of each of the refrigerant and the refrigerator oil; and a mixing ratio of the refrigerant in solution and the refrigerator oil in solution at the motor portion (23),
the refrigerator oil is a polyol ester oil,
the polyol ester oil is an ester reaction product of an aliphatic acid and at least one of pentaerythritol and neopentylglycol,
the carbon number of the aliphatic acid is not less than 4 and not more than 9,
a ratio of a straight-chain aliphatic acid included in the aliphatic acid is not less than 10 mass % and not more than 70 mass %,
a temperature of the motor portion (23) is not lower than 90°C and not higher than 130°C,
a pressure of the motor portion (23) is not less than 1.9 MPa and not more than 4.5 MPa,
the refrigerant is difluoromethane, and
a temperature of the evaporator (14) is not lower than -35°C and not higher than -25°C.

2. A refrigeration cycle apparatus (10) comprising: a refrigerant circuit; and a motor portion (23), the refrigerant circuit comprising a compressor (11), a condenser (12) and an evaporator (14), wherein
refrigerant is contained in the refrigerant circuit,
a refrigerator oil is filled into the compressor (11), and an insulating material including a polyester-based resin used in the motor portion (23) is immersed in the refrigerator oil,
a solubility parameter, with units $cal^{1/2}cm^{-3/2}$, at not lower than 90°C and not higher than 130°C, and at not less than 1.9 MPa and not more than 4.5 MPa, of a mixture of the refrigerant and the refrigerator oil is not less than 8.2 and not more than 9.0, the solubility parameter being obtained according to the appended description,
the solubility parameter of a mixture of the refrigerant and the refrigerator oil is an average value of a solubility parameter of each of the refrigerant and the refrigerator oil, the average value being calculated based on: the solubility parameter of each of the refrigerant and the refrigerator oil; and a mixing ratio of the refrigerant in solution and the refrigerator oil in solution at the motor portion (23),
the refrigerator oil is an alkylbenzene oil,
a temperature of the motor portion (23) is not lower than 90°C and not higher than 130°C,
a pressure of the motor portion (23) is not less than 1.9 MPa and not more than 4.5 MPa,
the refrigerant is difluoromethane, and
a temperature of the evaporator (14) is not lower than -35°C and not higher than -25°C.

3. The refrigeration cycle apparatus (10) according to claim 1 or 2, wherein
the polyester-based resin is at least one selected from the group consisting of polyethylene terephthalate, polyethylene naphthalate and polybutylene terephthalate.

**Patentansprüche**

1. Kältekreislaufvorrichtung (10), umfassend: einen Kältemittelkreislauf; und einen Motorabschnitt (23), wobei der Kältemittelkreislauf einen Kompressor (11), einen Kondensator (12) und einen Verdampfer (14) umfasst, wobei in dem Kältemittelkreislauf ein Kältemittel enthalten ist,
ein Kältemaschinenöl in den Kompressor (11) eingefüllt ist und ein Isoliermaterial, das ein Harz auf Polyesterbasis umfasst, das in dem Motorabschnitt (23) verwendet wird, in das Kältemaschinenöl eingetaucht ist,
ein Löslichkeitsparameter, mit den Einheiten $cal^{1/2}cm^{-3/2}$, bei nicht unter 90 °C und nicht über 130 °C, und nicht weniger als 1,9 MPa und nicht mehr als 4,5 MPa, eines Gemischs des Kältemittels und des Kältemaschinenöls nicht weniger als 8,2 und nicht mehr als 9,0 beträgt, wobei der Löslichkeitsparameter gemäß beiliegender Beschreibung erhalten wird,

der Löslichkeitsparameter eines Gemischs des Kältemittels und des Kältemaschinenöls ein Mittelwert eines Löslichkeitsparameters jeweils des Kältemittels und des Kältemaschinenöls ist, wobei der Durchschnittswert basierend auf Folgendem berechnet wird: dem Löslichkeitsparameter jeweils des Kältemittels und des Kältemaschinenöls; und einem Mischverhältnis des Kältemittels in Lösung und des Kältemaschinenöls in Lösung an dem Motorabschnitt (23),

das Kältemaschinenöl ein Polyolesteröl ist,

das Polyolesteröl ein Esterreaktionsprodukt einer aliphatischen Säure und zumindest einem von Pentaerythritol und Neopentylglykol ist,

die Kohlenstoffzahl der aliphatischen Säure nicht weniger als 4 und nicht mehr als 9 beträgt,

der Anteil einer in der aliphatischen Säure enthaltenen unverzweigten aliphatischen Säure nicht weniger als 10 Masse-% und nicht mehr als 70 Masse-% beträgt,

eine Temperatur des Motorabschnitts (23) nicht unter 90 °C und nicht über 130 °C liegt,

ein Druck des Motorabschnitts (23) nicht weniger als 1,9 MPa und nicht mehr als 4,5 MPa beträgt,

das Kältemittel Difluormethan ist, und

eine Temperatur des Verdampfers (14) nicht unter -35 °C und nicht über -25 °C liegt.

**2.** Kältekreislaufvorrichtung (10), umfassend: einen Kältemittelkreislauf; und einen Motorabschnitt (23), wobei der Kältemittelkreislauf einen Kompressor (11), einen Kondensator (12) und einen Verdampfer (14) umfasst, wobei in dem Kältemittelkreislauf ein Kältemittel enthalten ist,

ein Kältemaschinenöl in den Kompressor (11) eingefüllt ist und ein Isoliermaterial, das ein Harz auf Polyesterbasis umfasst, das in dem Motorabschnitt (23) verwendet wird, in das Kältemaschinenöl eingetaucht ist,

ein Löslichkeitsparameter, mit den Einheiten cal$^{1/2}$cm$^{-3/2}$, bei nicht unter 90 °C und nicht über 130 °C, und nicht weniger als 1,9 MPa und nicht mehr als 4,5 MPa, eines Gemischs des Kältemittels und des Kältemaschinenöls nicht weniger als 8,2 und nicht mehr als 9,0 beträgt, wobei der Löslichkeitsparameter gemäß beiliegender Beschreibung erhalten wird,

der Löslichkeitsparameter eines Gemischs des Kältemittels und des Kältemaschinenöls ein Mittelwert eines Löslichkeitsparameters jeweils des Kältemittels und des Kältemaschinenöls ist, wobei der Mittelwert basierend auf Folgendem berechnet wird: dem Löslichkeitsparameter jeweils des Kältemittels und des Kältemaschinenöls; und einem Mischverhältnis des Kältemittels in Lösung und des Kältemaschinenöls in Lösung an dem Motorabschnitt (23),

das Kältemaschinenöl ein Alkylbenzolöl ist,

eine Temperatur des Motorabschnitts (23) nicht unter 90 °C und nicht über 130 °C liegt,

ein Druck des Motorabschnitts (23) nicht weniger als 1,9 MPa und nicht mehr als 4,5 MPa beträgt,

das Kältemittel Difluormethan ist, und

eine Temperatur des Verdampfers (14) nicht unter -35 °C und nicht über -25 °C liegt.

**3.** Kältekreislaufvorrichtung (10) nach Anspruch 1 oder 2, wobei das Harz auf Polyesterbasis zumindest ein aus der aus Polyethylenterephthalat, Polyethylennaphthalat und Polybutylenterephthalat bestehenden Gruppe ausgewähltes ist.

**Revendications**

**1.** Appareil à cycle de réfrigération (10) comprenant : un circuit de réfrigérant ; et une partie de moteur (23), le circuit de réfrigérant comprenant un compresseur (11), un condenseur (12) et un évaporateur (14), dans lequel

le réfrigérant est contenu dans le circuit de réfrigérant,

une huile de réfrigération est versée dans le compresseur (11), et un matériau isolant comprenant une résine à base de polyester utilisée dans la partie de moteur (23) est immergé dans l'huile de réfrigération,

un paramètre de solubilité, avec des unités cal$^{1/2}$cm$^{-3/2}$, à au moins 90°C et au plus 130°C, et à au moins 1,9 MPa et au plus 4,5 MPa, d'un mélange du réfrigérant et de l'huile de réfrigération n'est ni inférieur à 8,2 ni supérieur à 9,0, le paramètre de solubilité étant obtenu conformément à la description annexée,

le paramètre de solubilité d'un mélange du réfrigérant et de l'huile de réfrigération est une valeur moyenne d'un paramètre de solubilité de chacun du réfrigérant et de l'huile de réfrigération, la valeur moyenne étant calculée sur la base : du paramètre de solubilité de chacun du réfrigérant et de l'huile de réfrigération ; et d'un rapport de mélange du réfrigérant en solution et de l'huile de réfrigération en solution au niveau de la partie de moteur (23),

l'huile de réfrigération est une huile d'ester de polyol,

l'huile d'ester de polyol est un produit de réaction d'ester d'un acide aliphatique et d'au moins l'un parmi le pentaérythritol et du néopentylglycol,

le nombre d'atomes de carbone de l'acide aliphatique n'est pas inférieur à 4 ni supérieur à 9,
un rapport d'un acide aliphatique à chaîne droite inclus dans l'acide aliphatique n'est pas inférieur à 10 % en masse et pas supérieur à 70 % en masse,
une température de la partie de moteur (23) n'est ni inférieure à 90°C ni supérieure à 130°C,
une pression de la partie de moteur (23) n'est ni inférieure à 1,9 MPa ni supérieure à 4,5 MPa,
le réfrigérant est du difluorométhane, et
une température de l'évaporateur (14) n'est ni inférieure à -35°C ni supérieure à -25°C.

**2.** Appareil à cycle de réfrigération (10) comprenant : un circuit de réfrigérant ; et une partie de moteur (23), le circuit de réfrigérant comprenant un compresseur (11), un condenseur (12) et un évaporateur (14), dans lequel
le réfrigérant est contenu dans le circuit de réfrigérant,
une huile de réfrigération est versée dans le compresseur (11), et un matériau isolant comprenant une résine à base de polyester utilisée dans la partie de moteur (23) est immergé dans l'huile de réfrigération,
un paramètre de solubilité, avec des unités cal$^{1/2}$cm$^{-3/2}$, à au moins 90°C et au plus 130°C, et à au moins 1,9 MPa et au plus 4,5 MPa, d'un mélange du réfrigérant et de l'huile de réfrigération n'est ni inférieur à 8,2 ni supérieur à 9,0, le paramètre de solubilité étant obtenu conformément à la description annexée,
le paramètre de solubilité d'un mélange du réfrigérant et de l'huile de réfrigération est une valeur moyenne d'un paramètre de solubilité de chacun du réfrigérant et de l'huile de réfrigération, la valeur moyenne étant calculée sur la base : du paramètre de solubilité de chacun du réfrigérant et de l'huile de réfrigération ; et d'un rapport de mélange du réfrigérant en solution et de l'huile de réfrigération en solution au niveau de la partie de moteur (23),
l'huile de réfrigérateur est une huile d'alkylbenzène, une température de la partie de moteur (23) n'est ni inférieure à 90°C ni supérieure à 130°C,
une pression de la partie de moteur (23) n'est ni inférieure à 1,9 MPa ni supérieure à 4,5 MPa,
le réfrigérant est du difluorométhane, et
une température de l'évaporateur (14) n'est ni inférieure à -35°C ni supérieure à -25°C.

**3.** Appareil à cycle de réfrigération (10) selon la revendication 1 ou 2, dans lequel
la résine à base de polyester est au moins une résine choisie dans le groupe comprenant le polyéthylène téréphtalate, le polyéthylène naphtalate et le polybutylène téréphtalate.

FIG.1

FIG.2

**EP 3 460 356 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7188687 A
- JP 2015172204 A
- JP 2015168769 A
- JP 2002129179 A
- JP 2002227767 A
- WO 2012086518 A1